# EUROPEAN PATENT APPLICATION

(11) **EP 0 770 323 A1**
(43) Date of publication of application: **02.05.1997**
(21) Application number: 96202947.6
(22) Date of filing: 22.10.1996
(51) Int. Cl.: A01F 25/20, A01K 5/00

(54) **Forage chopper-mixer car with rear mobile shutter for mixing tank closure**

(30) Priority: 23.10.1995 IT MI952183
(71) Applicant: OFFICINE SGARIBOLDI S.n.c. di Sgariboldi Giuseppe & C., 20072 Camairago (Milano) (IT)
(72) Inventor: Sgariboldi, Giuseppe, 20072 Camairago (Milano) (IT)
(74) Representative: Martegani, Franco

(57) **Abstract**

A forage chopper-mixer car comprises a mixing tank (11) the rear wall of which (29) displays a wide opening (14) for forage loading by means of a silage unloading cutter, which opening (14) is partially closed by a mobile heel (15) which can be moved between a lowered position at ground level and a lifted position. According to the present invention, with said heel (15) a mobile shutter (16, 21) cooperates which can be moved, together with said heel (15) between an opened, non-operative position when the heel (15) is lowered at ground level and an operative position in which said shutter closes said opening (14) when the heel (15) is lifted.

## Description

The present invention relates to a forage chopper-mixer car provided with a characteristic rear mobile shutter for closing the rear side of the mixing tank, which shutter can be moved between a lowered position when the forage must be loaded into the tank by means of a silage unloading cutter, and a lifted position, when the loaded forage must be chopped and mixed inside said tank, by means of a suitable Archimedean screw.

As those skilled in the art are well aware of, for animals feeding in livestock husbandry sector, forage chopper-mixer cars are commonly used inside which products destined to animals feeding are chopped and mixed by means of Archimedean screws equipped with radial blades, such as: mais insilages, grass insilages, forages and straw in their natural status, or in bale form.

Loading the product into said chopper-mixer cars by means of a silage unloading cutter of drum type which is installed on the rear side of the car by means of an articulated carrier system, which allows said cutter to vertically move (following a bent trajectory) between a non-operative, lowered position inside which said cutter is within the overall dimensions of the car, and a lifted operative position raised from ground level, in which said cutter can perform the silage unloading, is known as well.

The chopper-mixer car is loaded by the cutter which, by revolving with a relatively high revolution speed, takes the heaped up silage and launches it, by centrifugal force, into the interior of the same car, through a rear opening provided in the mixing tank.

A forage chopper-mixer car of this type is disclosed and illustrated, for example, in Italian patent for Utility Model No. 221,628 and in EP-A-562 693.

This type of cars should have their mixer tank with a rear opening which is as large as possible in order to allow said tank to be loaded by means of an efficient silage unloading cutter, rather than by means of a suitable auxiliary loading apparatus which must be used with completely closed mixer tanks.

However, a mixer tank with an opening in its rear side is not consistent with the need for closing said rear opening when forage is mixed and chopped, which forage, otherwise, would escape from said tank.

The purpose of the present invention is of obviating the drawbacks displayed by the prior art, by providing a forage chopper-mixer car in which the rear, opened wall of the mixing tank can be advantageously closed at the end of forage loading operation, carried out by means of a silage unloading cutter, in order to correctly perform the operation of silage chopping-mixing inside said tank without losing any portions of loaded forage.

The above purpose is achieved by means of a forage chopper-mixer car displaying the characteristics mentioned in the appended claims.

The structural and functional characteristics of the invention and its advantages over the prior art will be clear from an examination into the following disclosure, made by referring to the accompanying schematic drawings, which display an exemplifying embodiment of forage chopper-mixer car realized according to the innovative principles of the same invention.

In the drawings:
- Figure 1 is an elevation view illustrating the rear side of the mixing tank of the car with the heel being in its lowered, ground-level position and the mobile shutter being in its opened position during the step of forage loading into said tank;
- Figure 2 is a view similar to Figure 1, but illustrating the heel in its position lifted from ground level and with the shutter being in its closed position of forage mixing-chopping inside the tank;
- Figure 3 is a side elevation view illustrating another embodiment of the invention with the heel being in its lowered position and the shutter being in its opened position of mixing tank loading;
- Figure 4 is a similar view to Figure 3, but illustrating the heel lifted from ground level and the shutter being in its position in which it closes said mixing tank;
- Figure 5 is an elevation view according to arrow F of Figure 3;
- Figure 6 is an elevation view according to arrow F1 of Figure 4;
- Figures 7 and 8 are two perspective views illustrating the car of Figure 3-6, with its heel being in its lowered and lifted positions, respectively; and
- Figures 9 and 10 are two side elevation views illustrating a third embodiment of car according to the present invention with its heel being in its lowered and lifted positions, respectively.

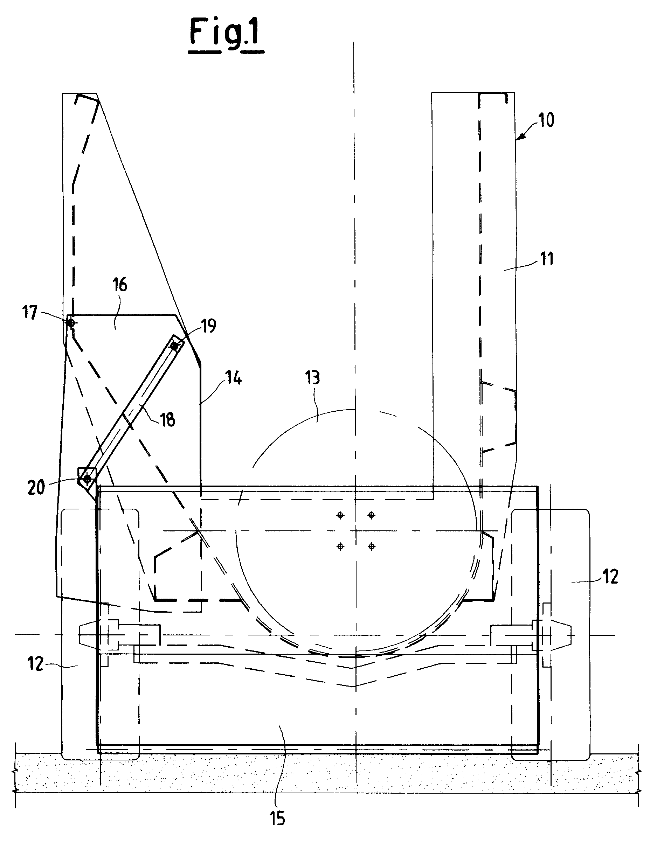

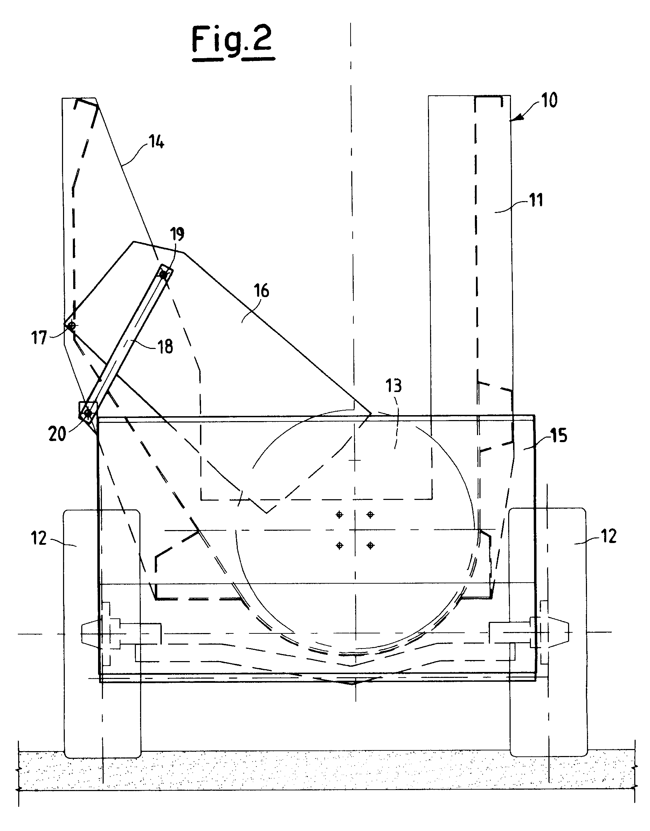

In Figures 1, 2 of the accompanying drawings the forage chopper-mixer car according to the present invention is generally indicated with (10) and is structurally formed by a mixing tank (11) mounted on wheels (12). Inside the tank (11) a motor-driven forage chopping-mixing Archimedean screw revolves, which is schematically displayed with (13).

The rear side of the tank (11) displays a wide opening (14) provided in order to allow forage to be loaded by means of a silage unloading cutter of type known (not shown in Figures).

With (15) the so said "heel" of the car is shown, which performs the task of closing the bottom portion of opening (14), thus constituting an obstacle in the way of the forage pushed by the Archimedean screw (13), of protecting the wheels (12) from forage, and of gathering the forage on ground.

The heel (15) can be moved between the lowered position at ground level shown in Figure (1), of complete opening of the rear side of the tank (10), and the lifted position shown in Figure 2, in which the rear wall of the tank (11) is partially closed.

According to the present invention, with the heel (15) a mobile shutter (16) cooperates, hinged in (17) to a side wall of the tank (11).

Said shutter (16) is operatively linked to the heel (15) by means of a lever (18) which is hinged at its ends in (19, 20), to the same shutter (16) and to the tank (11), respectively.

As one will clearly see from Figures 1, 2 of accompanying drawings, when the heel (15) is in its lowered position as displayed in Figure 1 in order to allow forage to be loaded into the interior of the tank (11), the shutter (16) is laterally positioned in a non-operative position in which the opening (14) has its largest span.

When forage loading is complete, in order to allow the loaded forage to be chopped and mixed, the heel (15) is lifted to its position as shown in Figure 2 with the shutter (16) being automatically caused to rotate around (20) reaching its operative position of partial closure of opening (14) which prevents the loaded forage to run off the tank.

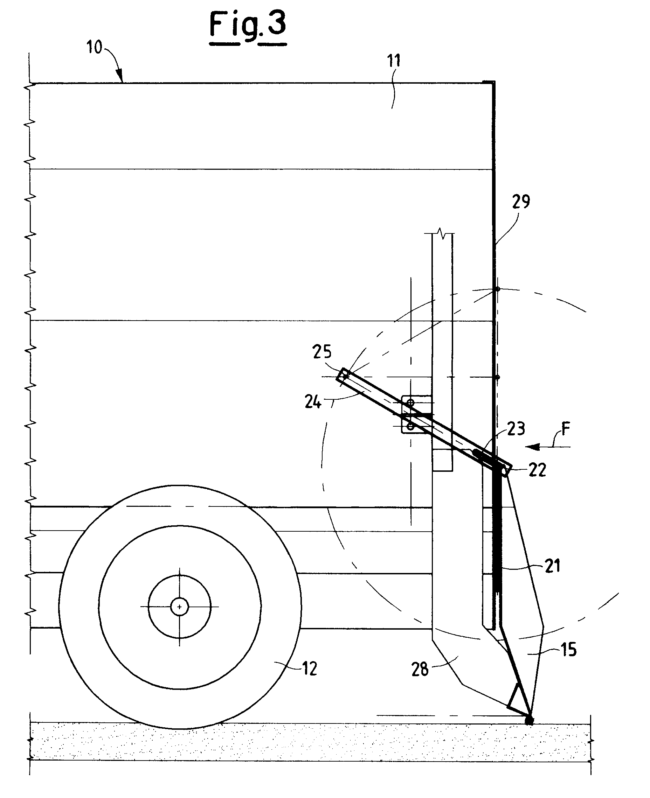

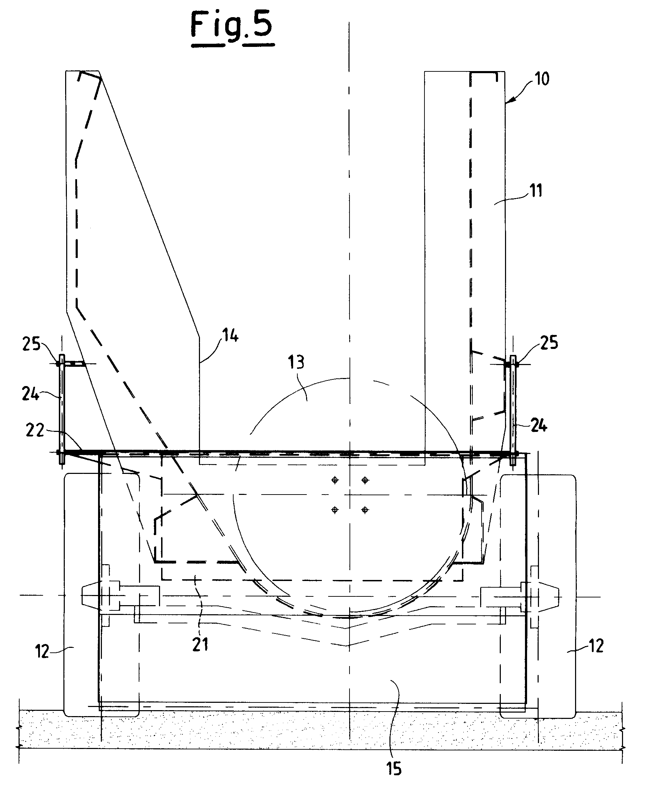

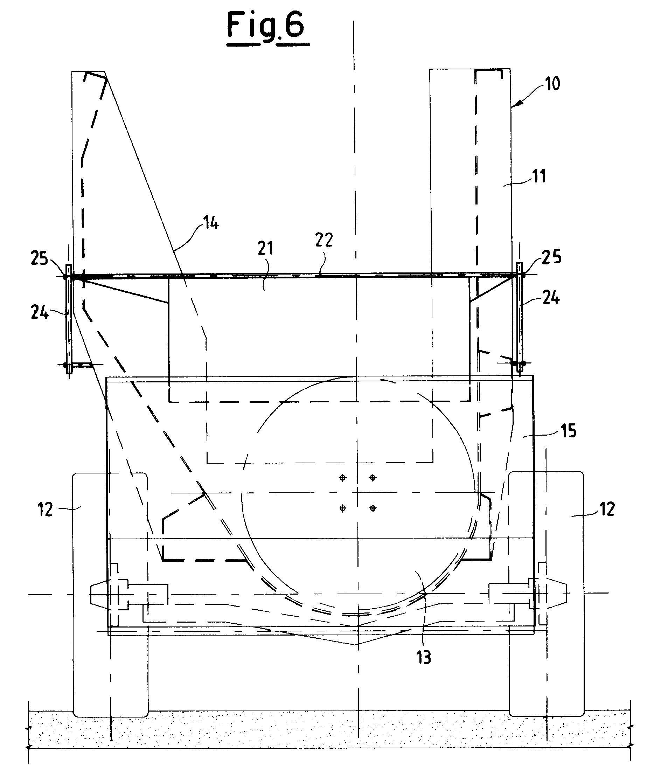

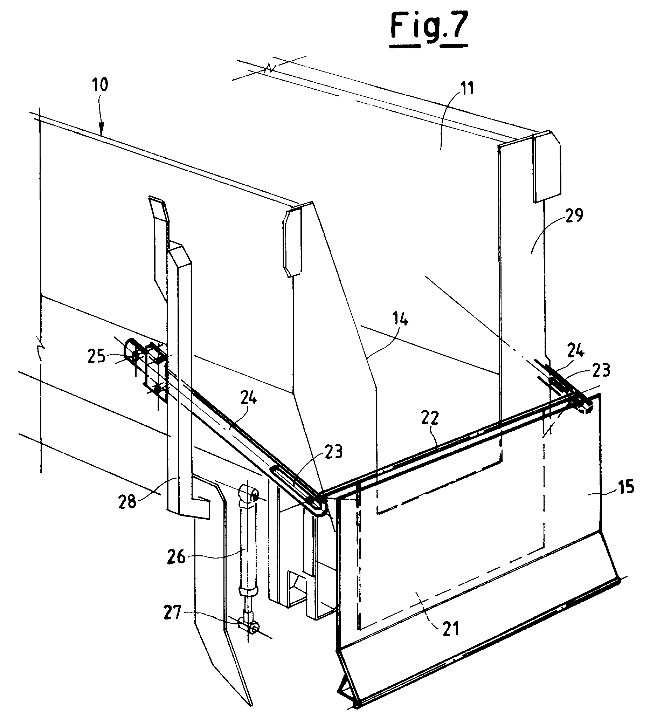

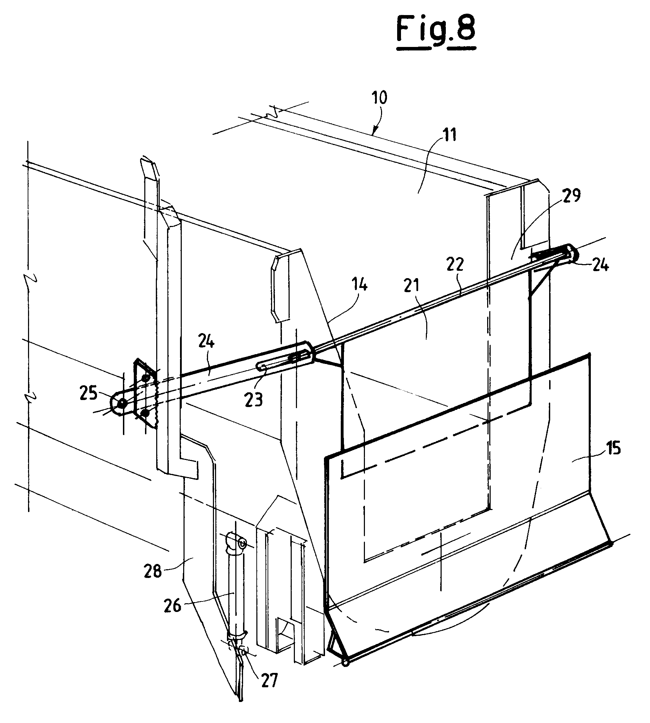

According to the embodiment shown in Figures 3-8, a larger shutter (21) is provided which, instead of oscillating as shutter (16) of Figures 1, 2, is translatable inside a room provided between the inner surface of the heel (15) and the outer surface of the rear, opened wall (29) of the tank (11).

For that purpose, the shutter (21) is borne by a cross beam (22) the opposite ends of which are constrained and can slide inside respective slots (23) provided through two actuator levers (24) hinged at their opposite ends in (25) onto the side walls of the tank (11).

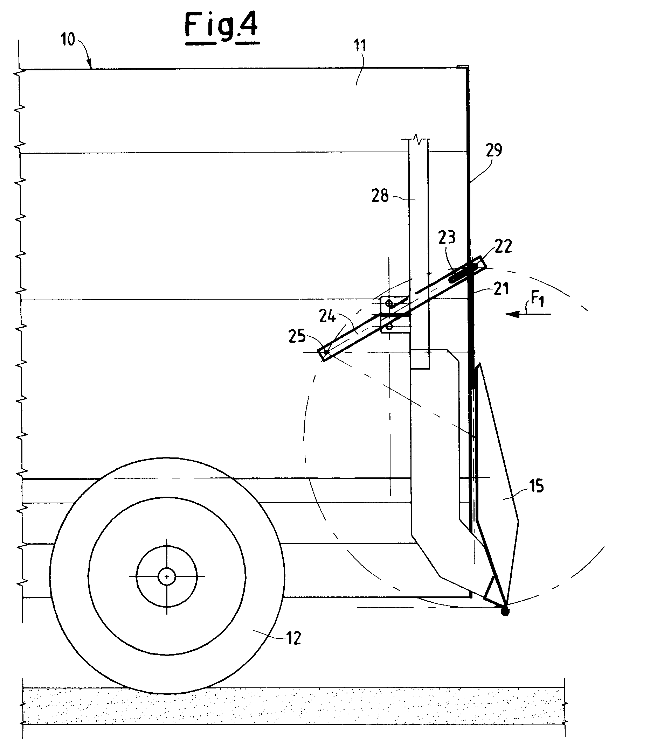

The levers (24) are driven to move by means of a hydraulic draw coupling (26) hinged in (27) to a linking rod (28) linked in its turn to the lever (24) and to the heel (15) (Figures 3, 4).

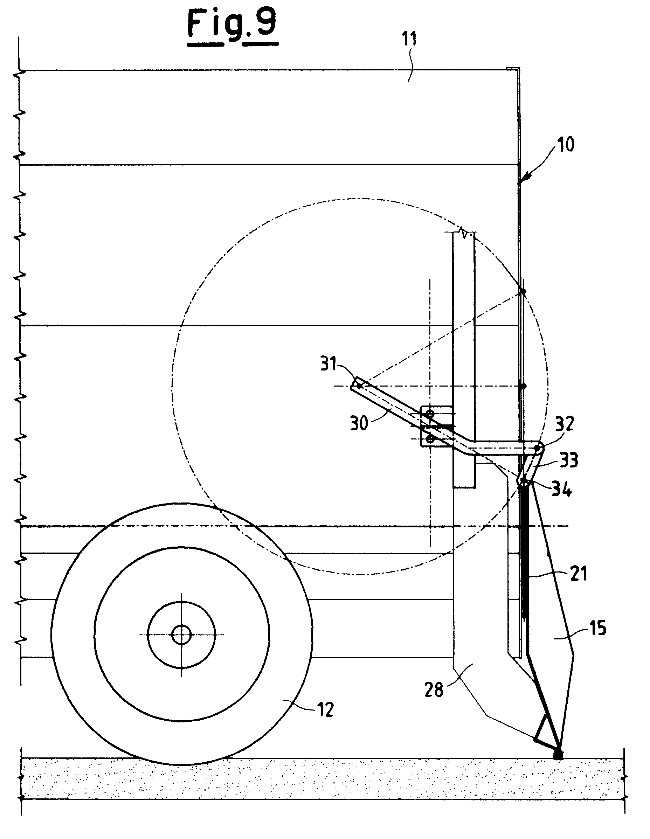

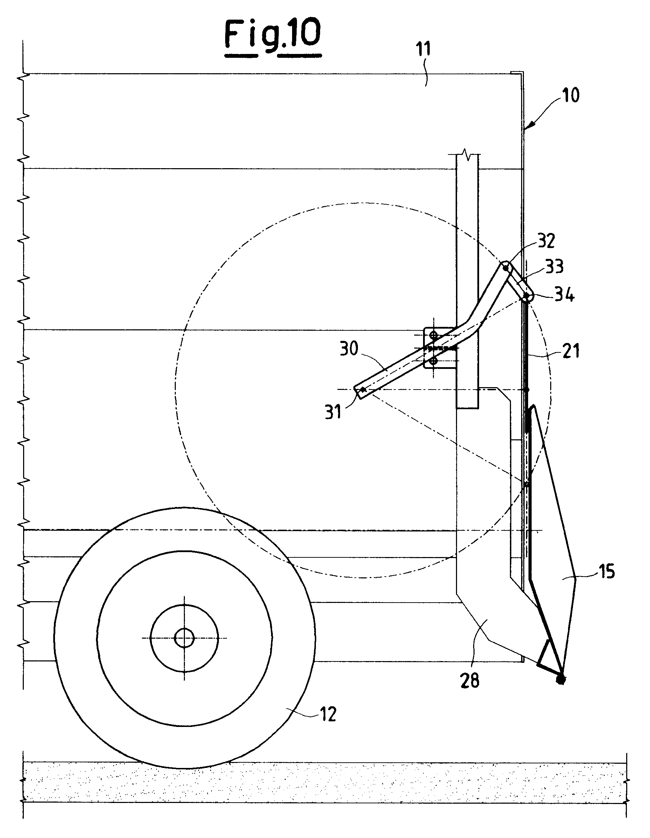

The embodiment displayed in Figures 9, 10 is substantially equivalent to the embodiment of Figures 3-8.

A modification consists in that the translation movement of the shutter (21) is driven by a bell crank (30) which is hinged at one of its ends in (31) onto the mixing tank (11) and at its opposite end in (32) to a shackle (33) hinged in (34) onto the shutter (21).

All of the three embodiments disclosed above achieve the purpose of closing the rear wall of the mixing tank (11) when the heel (15) is lifted, for performing the step of mixing/chopping the forage which was previously loaded by means of the silage unloading cutter.

## Claims

1. Forage chopper-mixer car of the type comprising a mixing tank (11) the rear wall of which (29) displays a wide opening (14) for forage loading by means of a silage unloading cutter, which opening (14) is partially closed by means of a mobile heel (15) which can be moved between a lowered position at ground level and a lifted position, characterized in that with said heel (15) a mobile shutter (16, 21) cooperates which can be moved, together with said heel (15) between an opened, non-operative position when the heel (15) is lowered and an operative position in which it closes said opening (14) when the heel (15) is lifted.

2. Car according to claim 1, characterized in that said mobile shutter (16) is laterally hinged in (17) onto the tank (11) and is operatively linked to the heel (15) by means of a lever (18) which is hinged at its ends in (19, 20) to the same shutter (16) and to the tank (11), respectively.

3. Car according to claim 1, characterized in that said shutter (21) is translatable in a room provided between the inner surface of the heel (15) and the outer surface of the rear, open wall (29) of the tank (11), with an operative linkage lever system being provided between said mobile shutter (21) and said heel (15).

4. Car according to claim 3, characterized in that said lever system comprises two actuator levers (24) hinged at an end in (25) onto the side walls of the tank (11) and each of them displaying at its opposite end, hinging/sliding slots (23) to which the ends are constrained of a horizontal beam (22) bearing said shutter (21).

5. Car according to claim 3, characterized in that said lever system comprises a bell crank (30) which is hinged at one of its ends in (31) onto the mixing tank (11) and at its opposite end in (32) to a shackle (33) hinged in (34) onto said shutter (21).
